# EUROPÄISCHE PATENTANMELDUNG

(11) **EP 1 182 006 A2**
(43) Veröffentlichungstag der Anmeldung: **27.02.2002**
(21) Anmeldenummer: 01120310.6
(22) Anmeldetag: 24.08.2001
(51) Int. Cl.: B23Q 17/10

(54) **Drehzahlüberwachung, insbesondere Stillstandsüberwachung einer Werkzeugspindel**

(30) Priorität: 25.08.2000 DE 10041854
(71) Anmelder: Heckert Werkzeugmaschinen GmbH, 09117 Chemnitz (DE)
(72) Erfinder: Seyfert, Sönn, Dipl.-Ing. (FH), 09116 Chemnitz (DE)
(74) Vertreter: Rumrich, Gabriele

(57) **Zusammenfassung**

Die Erfindung betrifft eine Drehzahlüberwachung, insbesondere Stillstandsüberwachung einer Werkzeugspindel, insbesondere einer in einem auswechselbaren Spindelkopf (1) gelagerten Schnellaufspindel (2), mit einem rotierenden Bereich, dem die Schellaufspindel zugeordnet ist, und einem feststehenden Bereich des Spindelkopfes (1), vorzugsweise für ein Fräsbearbeitungszentrum. Erfindungsgemäß ist an dem rotierenden Bereich des Spindelkopfes (1) wenigstens ein Signalelement und diesem gegenüberliegend am Seststehenden Bereich des Spindelkopfes (1) wenigstens ein Sensorelement angeordnet, wobei vom Signalelement zum Sensorelement eine berührungslose Übertragung des Signals der zu überwachenden Ist-Frequenz des rotierenden Bereiches und somit der Werkzeugspindel erfolgt und das Signal der Ist-Frequenz an eine Auswertebaugruppe weitergeleitet und in dieser ausgewertet wird.

## Beschreibung

Die Erfindung betrifft eine Drehzahlüberwachung, insbesondere Stillstandsüberwachung einer Werkzeugspindel, vorzugsweise einer, in einem auswechselbaren Spindelkopf gelagerten, Schnellaufspindel nach dem Oberbegriff des ersten Patentanspruchs. Dabei ist die Schnellaufspindel in einem zum feststehenden Teil der Maschine wechselbaren Spindelkopf gelagert, welcher einen rotierenden Bereich und einen feststehenden Bereich aufweist, und findet vorzugsweise in Fräsbearbeitungszentren Anwendung.
In DE 43 30 820 A1 und in dem Prospekt KOMET M042 System zur automatisierten Feinbearbeitung wird ein Werkzeugkopf einer Bohrmaschine mit externer Stromversorgung beschrieben, bei welchem zur Verstellwegmessung eine induktive Stromübertragungsstrecke genutzt wird. Das maschinenseitige Spulengehäuse umragt den Werkzeugschaft und es sind weiterhin optoelektronische Sendeempfänger für den Datenaustausch vorgesehen. Diese Lösung ist für einen Drehzahlbereich bis maximal 7000 min-1 einsetzbar. Für die Drehzahlüberwachung, insbesondere die Stillstandsüberwachung von schnellaufenden Werkzeugspindeln mit einer Drehzahl in der Größenordnung von 70.000 bis 10.0.000 U/min sind derzeitig keine berührungslos arbeitende Lösungen bekannt.

Aufgabe der Erfindung ist es, eine berührungslos arbeitende Lösung für die Drehzahlüberwachung, insbesondere Stillstandsüberwachung einer Werkzeugspindel, vorzugsweise einer in einem auswechselbaren Spindelkopf gelagerten Schnellaufspindel, z.B. für ein Fräsbearbeitungszentrum, zu entwickeln, die eine zuverlässige berührungslose Übertragung der Drehzahlwerte auch bei hohen Drehzahlen in der Größenordnung bis 100.000 U/min gewährleistet.

Diese Aufgabe wird mit den Merkmalen des ersten Patentanspruches gelöst. Vorteilhafte Weiterbildungen ergeben sich aus den Unteransprüchen.
Die Drehzahlüberwachung, insbesondere Stillstandsüberwachung der Werkzeugspindel, vorzugsweise einer Schnellaufspindel, die in einem zum feststehenden Teil der Maschine wechselbaren Spindelkopf gelagert ist, mit einem rotierenden Bereich, dem die Werkzeugspindel zugeordnet ist, und einem feststehenden Bereich des Spindelkopfes, erfolgt erfindungsgemäß dadurch, daß an dem rotierenden Bereich des Spindelkopfes wenigstens ein Signalelement und diesem zugeordnet am feststehenden Bereich des Spindelkopfes wenigstens ein Sensorelement angeordnet ist und daß vom Signalelement zum Sensorelement eine berührungslose Übertragung des Signals der zu überwachenden Frequenz erfolgt. Das gewonnene Signal der Ist-Frequenz wird an eine Auswertebaugruppe weitergeleitet und in dieser mit einem Sollwert in Form eines vorgegebenen Sensorsignals verglichen, wobei der Sollwert bei der Stillstandsüberwachung kleiner oder gleich einer zu überwachenden Frequenz ist, die dem Spindelstillstand entspricht. Bei einem Signal welches kleiner oder gleich dem vorgegebenen Sollwert Sensorsignal ist, wird die Meldung "Spindelstillstand" an eine externe Schaltung am feststehenden Maschinenteil ausgegeben und die zum Wechseln des Spindelkopfes notwendigen Handhabungen können ausgelöst werden.
Die Auswertebaugruppe ist vorzugsweise am feststehenden Teil der Maschine angeordnet.
Um ein einfaches Wechseln des Spindelkopfes zu gewährleisten, erfolgt die Übertragung des Sensorsignals vom Spindelkopf zur Auswertebaugruppe kabellos, bevorzugt über einen Infrarotsensor, dessen Infrarotsender am Spindelkopf und dessen Infrarotempfänger am feststehenden Teil der Maschine angeordnet ist. Weiterhin erfolgt die Stromversorgung der am Spindelkopf angeordneten Sensoren kabellos über eine am feststehenden Teil der Maschine angeordnete Primärspule und eine am Spindelkopf befindliche Sekundärspule. Somit sind beim Auswechseln des Spindelkopfes keinerlei Handhabungen vorzunehmen, um elektrische Kontaktierungen zu Schließen bzw. zu Lösen.
Die berührungslose Signalübertragung vom rotierenden Bereich zum feststehenden Bereich des Spindelkopfes kann mittels unterschiedlicher physikalischer Prinzipien erfolgen, z.B. induktiv, kapazitiv oder mittels Hall-Effektes.

Um die Zuverlässigkeit der Stillstandsüberwachung zu erhöhen, werden vorzugsweise zwei Signalelemente am rotierenden Bereich und zwei Sensorelemente am feststehenden Bereich des Spindelkopfes angeordnet und die beiden gewonnenen Sensorsignale über zwei getrennte Infrarotsensorkanäle zur Auswertebaugruppe übertragen. Ordnet man die zwei Signalelemente am rotierenden Bereich im Winkel von 180° und die zwei Sensorelemente am feststehenden Bereich des Spindelkopfes im Winkel kleiner oder größer 180° an oder umgekehrt, ist es zusätzlich möglich, die Drehrichtung der Spindel zu erfassen.
Bevorzugt werden in diesem Fall die zwei Signalelemente oder die zwei Sensorelemente im Winkel von 135° zueinander angeordnet, denn dann erzielt man eine Flankenabweichung der beiden Signale von 1/4 U/min, die sich einfach auswerten läßt. Eine positive oder negative Abweichung zeigt dann die Drehrichtung an.
Bei einer Schnellaufspindel, deren Drehzahl über auf ein Turbinenrad wirkende Druckluft in Form von Antriebs- oder Bremsluft gesteuert wird, erfolgt die Befestigung des Signalelementes vorzugsweise am Turbinenrad, mit welchem die Schnellaufspindel angetrieben wird, vorteilhafter Weise an der zum feststehenden Bereich des Spindelkopfes weisenden Stirnseite des Turbinenrades.

Bei Signalübertragung vom rotierenden zum feststehenden Bereich des Spindelkopfes mittels Hall-Effekt sind dies ein bzw. zwei Parmanentmagnete. Das Sensorelement ist dann als Hall-Sensor ausgebildet.
Die Magnete werden bevorzugt in Ausnehmungen des Turbinenrades geklebt.
Der bzw. die Infrarotübertragungskanäle werden mittels eines 1-Hz Grundtaktes überwacht. Bei Ausbleiben dieses Taktes wird der Antrieb der Spindel deaktiviert, d.h. bei Druckluftantrieb die Druckluftfreigabe der Antriebsluft und der Bremsluft gesperrt.
Die Auswertebaugruppe ist vorzugsweise als µC-System ausgebildet.

Mit der Erfindung wird eine einfache elegante Möglichkeit der Stillstandsüberwachung einer Schnellaufspindel im Drehzahlbereich bis 100.000 U/min geschaffen. Durch die kabellose Gewinnung der Signale und deren wiederum kabellose Weiterleitung an den feststehenden Teil der Maschine wird ein einfaches Auswechseln des Spindelkopfes möglich. Insbesondere durch die Verwendung von zwei Hall-Sensoren und zwei unabhängigen Übertragungskanälen wird eine hohe Zuverlässigkeit der Stillstandsüberwachung gewährleistet, bei gleichzeitiger Möglichkeit der Überwachung der Drehrichtung.
Selbstverständlich wäre auch eine Stromversorgung der im Spindelkopf angeordneten Bauelemente über Batterie oder eine elektrische Kontaktierung zwischen Spindelkopf und feststehenden Teil der Maschine möglich. Eine Batterie muß jedoch ständig hinsichtlich ihres Ladezustandes überwacht werden und benötigt zusätzlichen Bauraum. Eine elektrische Kontaktierung kann verschmutzen und dadurch funktionsunfähig werden. Die kabellose Stromübertragung mittels einer Primärspule im feststehenden Teil der Maschine und einer Sekundärspule im auswechselbaren Spindelkopf stellt dazu eine einfache und zuverlässige Lösung dar, die in dieser Art für die Stillstandsüberwachng einer Werkzeugspindel noch nicht bekannt war. Diese Art der Stromübertragung kann auch für den Antrieb der Schnellaufspindel genutzt werden.

Die Erfindung wird nachfolgend an einem Ausführungsbeispiel anhand von Zeichnungen näher erläutert. Es zeigen:
- Fig. 1:: Wechselbarer Spindelkopf mit Teil-Längsschnitt durch die Schnellaufspindel,
- Fig. 2:: Draufsicht auf den Adapter mit den Infrarotsensoren und der Sekundärspule,
- Fig. 3:: Prinzipdarstellung der Anordnung der Magnete und der Hall- Sensoren,
- Fig. 4:: Diagramm der Sensorsignale für Rechtslauf der Schnellaufspindel,
- Fig. 5:: Diagramm der beiden Sensorsignale für Linkslauf der Schnellaufspindel.

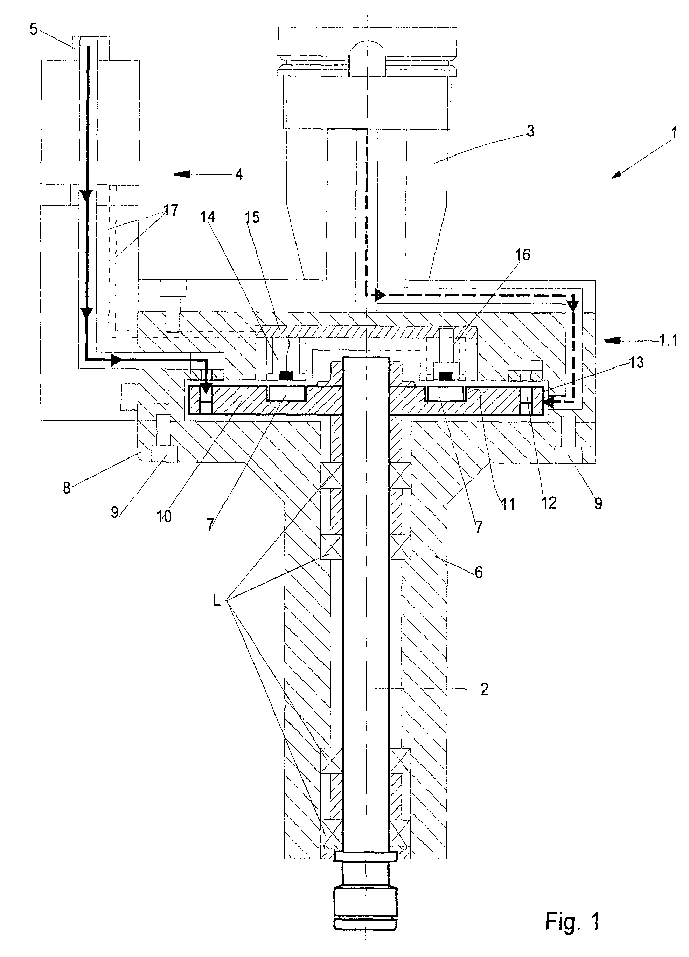

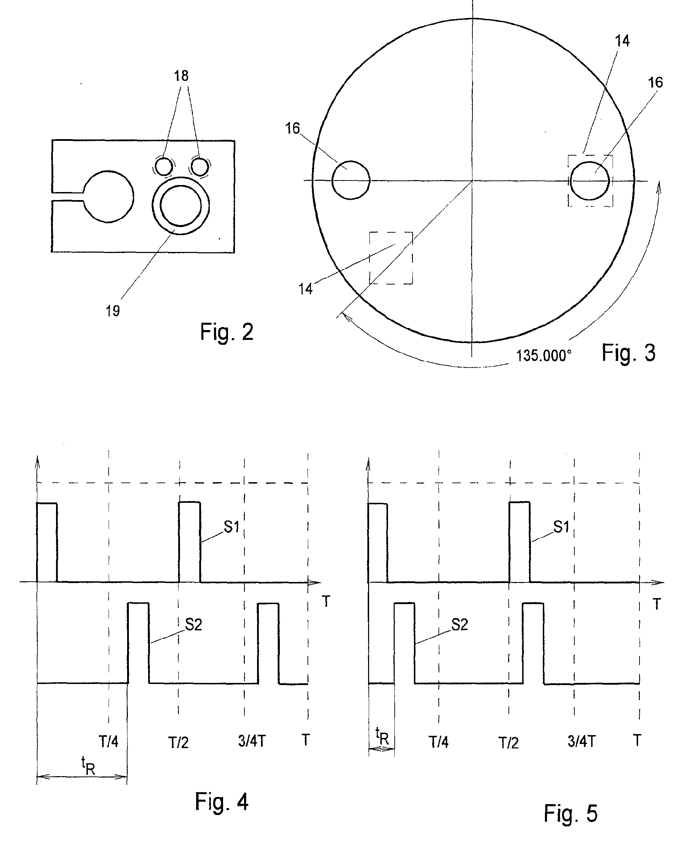

In Fig. 1 ist der Längs-Teilschnitt durch einen Spindelkopf 1 dargestellt, bei welchem der Antrieb der Schnellaufspindel 2 über Druckluft erfolgt. Der wechselbare Spindelkopf 1 besteht im wesentlichen aus einem Grundkörper 1.1, an dem in Richtung zum feststehenden Teil der Maschine (nicht dargestellt) der Spanndorn 3 und der Adapter 4 für die Druckluftzuführung 5 angeordnet sind. Die Schnellaufspindel 2 ist in einem zylindrischen Teil 6 des Spindelkopfes 1 über mehrere Lager L drehbar gelagert. Der zylindrische Teil 6 für die Spindellagerung weist an seinem in Richtung zum Spanndorn 3 weisenden Ende einen Flansch 8 auf und ist über diesen durch Befestigungselemente 9 am Grundkörper 1.1 des Spindelkopfes 1 befestigt. In Richtung zum Grundkörper 1.1 weist die Schnellaufspindel 2 an ihrem Ende ein daran befestigtes Turbinenrad 10 auf. In dem Turbinenrad 10 sind spanndornseitig Ausnehmungen 11 vorgesehen. Weiterhin weist das Turbinenrad 10 Antriebselemente 12 in der Art von Durchgangsöffnungen mit schräggestellten Flächen auf. Die radial umlaufende Fläche 13 des Turbinenrades 10 dient als Bremsfläche und kann ebenfalls mit zusätzlichen schräggestellten Flächenelementen versehen sein, welche die Bremswirkung verstärken. In den Ausnehmungen 11 des Turbinenrades 10 sitzen im Winkel von 180° zwei Permanentmagnete 7, die vorzugsweise eingeklebt sind. An der gegenüberliegenden Seite sind im Grundkörper 1.1 die Hall-Sensoren 14 im Winkel von 135° auf einer Leiterplatte 15 angeordnet, die über Schrauben 16 befestigt, und vorteilhafter Weise zusätzlich vergossen ist (z.B. mit Harz). Von der Leiterplatte 15 führt eine nur teilweise dargestellte Verkabelung 17 zu zwei Infrarotsensoren 18, die im Adapter 4 für die Druckluftzuführung integriert sind (siehe Fig. 2). In diesem Adapter 4 sitzt auch die Sekundärspule 19. Die Antriebsdruckluft wird von der Druckluftzuführung 5 im Adapter 4 entlang der Bohrungen, die mit der Durchgangslinie markiert sind, in deren Pfeilrichtung zu den Antriebselementen 12 des Turbinenrades 10 geführt. Die Bremsluft gelangt über eine mittige Durchgangsbohrung entlang der Bohrungen, die mit der gestrichelten Linie markiert sind, in deren Pfeilrichtung zur radial umlaufenden Fläche 13 des Turbinenrades 10. Die am feststehenden Teil der Maschine angeordneten Baugruppen in Form von Primärspule, Infrarotempfänger, Auswerteschaltung und externer Schaltung sind nicht dargestellt.
Die Funktionsweise ist folgende:
Nach Einwechseln des Spindelkopfes 1 in den feststehenden Teil der Maschine über den Spanndorn 3 ist auch der Druckluftanschluß 5 über den Adapter 4 angeschlossen. Antiebsdruckluft kann nun entlang der mit Pfeilen markierten Durchgangslinie in Pfeilrichtung zu den Antriebselementen 12 des Turbinenrades 10 geführt werden. Gleichzeitig wird in die Sekundärspule 19 über die nicht dargestellte Primärspule eine Spannung induziert, wodurch die Hall-Sensoren 14 und die Infrarotsensoren 18 mit Strom versorgt werden. Durch die am rotierenden Teil des Spindelkopfes 1 (hier am Turbinenrad 10) angeordneten Magnete 7 wird in den gegenüberliegenden Hall-Sensoren 14 ein Sensorsignal ausgelöst. Durch die versetzte Anordnung der Hall-Sensoren im Winkel von 135° ist die Flanke beider Sensorsignale zeitlich versetzt.
Die Signale gelangen über die Verkabelung 17 zu den beiden Infrarotsensoren 18 und werden somit über zwei getrennte Kanäle zu den nicht dargestellten Infrarotempfängern am feststehenden Teil der Maschine kabellos übertragen und zur Auswertebaugruppe weitergeleitet. Ist die Frequenz gleich oder kleiner eines vorgegebenen Sollwertes, der den Spindelstillstand charakterisiert, wird durch die Auswertebaugruppe das Signal "Spindelstillstand" zu einer externen Schaltung weitergeleitet und über diese Maßnahmen zum Entnehmen des Spindelkopfes eingeleitet.
Die beiden Infrarotübertragungskanäle werden mittels eines 1-Hz Grundtaktes überwacht. Bei Ausbleiben dieses Taktes wird die Druckluftfreigabe der Antriebsluft und der Bremsluft gesperrt.
Die als Mikrocomputer ausgebildete Auswertebaugruppe wird mit Hilfe einer externen Reset-Schaltung und das zugehörige µC-Programm mit einer Wachdog überwacht. Der Zustand der Reset-Schaltung und der Wachdog werden ebenfalls der externen Schaltung zur Verfügung gestellt. Das Signal wird als Fehlermeldung weitergeleitet und das Signal "Spindelstillstand" nicht ausgegeben.
Der Schaltrelaisausgang wird über eine Signalrückführung durch das µC-System überwacht und bei fehlender Übereinstimmung eine Fehlermeldung an die externe Schaltung ausgegeben.
In Fig. 3 wird als Prinzipdarstellung die Anordnung der Magnete 7 und der Hall-Sensoren 14 gezeigt. Die Magnete 7 sind dabei im Winkel von 180° und die Hall-Sensoren 14 im Winkel von 135° angeordnet.
Fig. 4 zeigt das Diagramm der beiden Schaltsignale S1, S2 der Hallsensoren im Rechtslauf und Fig. 5 im Linkslauf für eine Spindelumdrehung. Während einer Umdrehung werden durch bei jedem Hall-Sensor zwei Schaltsignale durch die rotierenden Magnete ausgelöst.

Durch die Anordnung der beiden Hall-Sensoren im Winkel von 135° entsteht zwischen den Flanken der Signale S1, S2 ein Zeitversatz t_{R} bei Rechtslauf gem. Fig. 4 und ein Zeitversatz T_{L} bei Linkslauf gem. Fig. 5, der die Drehrichtung anzeigt.

Gemäß weiterer nicht dargestellter Ausführungsvarianten können die Sensoren zur Drehzahlüberwachung der Schnellaufspindel auch auf dem induktiven oder kapazitiven Prinzip arbeiten. Weiterhin kann die kabellose Übertragung zur Auswertebaugruppe anstelle über Infrarotsensoren z.B. auch über Funk erfolgen.

Neben der reinen Stillstandsüberwachung als Sonderfall der Drehzahlüberwachung ist es selbstverständlich auch möglich, die Drehzahl der Spindel mit der erfindungsgemäßen Lösung auch bei hohen Drehzahlen bis 10.000 U/min berührungslos zu erfassen. Die Auswertung erfolgt dann ebenfalls über die Auswertebaugeruppe. Damit ist auch eine Regelung der Drehzahl möglich, z.B. kann bei einem Druckluftantrieb der Schnellaufspindel die Regelung der Drehzahl über ein Proportionalventil als Stellglied erfolgen, wobei dabei in Abhängigkeit von der gewünschten Drehzahl der Druck der Antriebsluft und/oder der Bremsluft verändert bzw. aktiviert oder deaktiviert wird.

## Patentansprüche

1. Drehzahlüberwachung, insbesondere Stillstandsüberwachung einer Werkzeugspindel, insbesondere einer in einem auswechselbaren Spindelkopf (1) gelagerten Schnellaufspindel (2), mit einem rotierenden Bereich, dem die Schellaufspindel zugeordnet ist, und einem feststehenden Bereich des Spindelkopfes (1), vorzugsweise für ein Fräsbearbeitungszentrum, **dadurch gekennzeichnet,**
- **daß** an dem rotierenden Bereich des Spindelkopfes (1) wenigstens ein Signalelement und diesem gegenüberliegend am feststehenden Bereich des Spindelkopfes (1) wenigstens ein Sensorelement angeordnet ist,
- **daß** vom Signalelement zum Sensorelement eine berührungslose Übertragung des Signals der zu überwachenden Ist-Frequenz des rotierenden Bereiches und somit der Werkzeugspindel erfolgt und
- **daß** das Signal der Ist-Frequenz an eine Auswertebaugruppe weitergeleitet und in dieser ausgewertet wird.

2. Drehzahlüberwachung, insbesondere Stillstandsüberwachung einer Werkzeugspindel, nach Anspruch 1, **dadurch gekennzeichnet, daß** das an die Auswerteeinheit weitergeleitete Signal der Ist-Frequenz der Werkzeugspindel
- mit einem Sollwert in Form eines vorgegebenen Sensorsignals welches kleiner oder gleich einer zu überwachenden Frequenz ist, verglichen wird, und daß die Werkzeugspindel in Abhängikeit vom Sollwert die angetrieben oder gebremst wird
oder
- daß bei einem Signal welches kleiner oder gleich dem vorgegebenen Sollwert der Ist-Frequenz des Sensorsignals ist, der dem Spindelstillstand entspricht, eine Meldung über den Spindelstillstand ausgegeben wird.

3. Drehzahlüberwachung, insbesondere Stillstandsüberwachung einer Werkzeugspindel, nach Anspruch 1 oder 2, **dadurch gekennzeichnet, daß** die in der Auswertebaugruppe ermittelten Drehzahlwerte und/oder die Meldung über den Spindelstillstand an eine externe Schaltung am feststehenden Maschinenteil ausgegeben wird.

4. Drehzahlüberwachung, insbesondere Stillstandsüberwachung einer Werkzeugspindel, nach Anspruch 1 oder 2, **dadurch gekennzeichnet, daß** die Auswertebaugruppe an einem feststehenden Teil der Maschine angeordnet ist und daß die Übertragung des Sensorsignals vom Spindelkopf (1) zur Auswertebaugruppe kabellos erfolgt.

5. Drehzahlüberwachung, insbesondere Stillstandsüberwachung einer Werkzeugspindel, nach Anspruch einem oder mehreren der Ansprüche 1 bis 4, **dadurch gekennzeichnet, daß** die Übertragung des Sensorsignals vom Spindelkopf (1) zur Auswertebaugruppe über einen Infrarotsensor erfolgt, dessen Infrarotsender (18) am Spindelkopf (1) und dessen Infrarotempfänger am feststehenden Teil der Maschine angeordnet ist.

6. Drehzahlüberwachung, insbesondere Stillstandsüberwachung einer Werkzeugspindel, nach einem oder mehreren der Ansprüche 1 bis 5, **dadurch gekennzeichnet, daß** die Stromversorgung der am Spindelkopf (1) angeordneten Sensoren kabellos erfolgt, wobei am feststehenden Teil der Maschine eine Primärspule und am Spindelkopf (1) eine Sekundärspule (19) angeordnet ist.

7. Drehzahlüberwachung, insbesondere Stillstandsüberwachung einer Werkzeugspindel, nach einem oder mehreren der Ansprüche 1 bis 6, **dadurch gekennzeichnet, daß** die Signalübertragung vom rotierenden Bereich zum feststehenden Bereich des Spindelkopfes (1) induktiv, kapazitiv oder mittels Hall-Effektes erfolgt.

8. Drehzahlüberwachung, insbesondere Stillstandsüberwachung einer Werkzeugspindel, nach einem oder mehreren der Ansprüche 1 bis 7, **dadurch gekennzeichnet, daß** zwei Signalelemente am rotierenden Bereich und zwei Sensorelemente am feststehenden Bereich des Spindelkopfes (1) angeordnet sind und daß die beiden gewonnenen Sensorsignale über zwei getrennte Infrarotsensorkanäle zur Auswertebaugruppe übertragen werden.

9. Drehzahlüberwachung, insbesondere Stillstandsüberwachung einer Werkzeugspindel, nach einem oder mehreren der Ansprüche 1 bis 8, **dadurch gekennzeichnet, daß** die zwei Signalelemente am rotierenden Bereich im Winkel von 180° und die zwei Sensorelemente am feststehenden Bereich des Spindelkopfes (1) im Winkel kleiner oder größer 180° angeordnet sind oder umgekehrt.

10. Drehzahlüberwachung, insbesondere Stillstandsüberwachung einer Werkzeugspindel, nach Anspruch 9, **dadurch gekennzeichnet, daß** die zwei Signalelemente oder die zwei Sensorelemente im Winkel von 135° zueinander angeordnet sind.

11. Drehzahlüberwachung, insbesondere Stillstandsüberwachung einer Werkzeugspindel, nach einem oder mehreren der Ansprüche 1 bis 10, **dadurch gekennzeichnet, daß** bei einer Schnellaufspindel (2), deren Drehzahl über auf ein Turbinenrad (10) wirkende Druckluft in Form von Antriebs- oder Bremsluft gesteuert wird, das Signalelement an dem an der Schnellaufspindel (2) angeordneten Turbinenrad (10) befestigt ist.

12. Drehzahlüberwachung, insbesondere Stillstandsüberwachung einer Werkzeugspindel, nach einem oder mehreren der Ansprüche 1 bis 11, **dadurch gekennzeichnet, daß** das Signalelement an der zum feststehenden Bereich des Spindelkopfes (1) weisenden Stirnseite des Turbinenrades (10) angeordnet ist.

13. Drehzahlüberwachung, insbesondere Stillstandsüberwachung einer Werkzeugspindel, nach einem oder mehreren der Ansprüche 1 bis 12, **dadurch gekennzeichnet, daß** bei Signalübertragung vom rotierenden zum feststehenden Bereich des Spindelkopfes (1) mittels Hall-Effekt das Signalelement als Permanentmagnet (7) und das Sensorelement als Hall-Sensor (14) ausgebildet ist.

14. Drehzahlüberwachung, insbesondere Stillstandsüberwachung einer Werkzeugspindel, nach einem oder mehreren der Ansprüche 1 bis 13, **dadurch gekennzeichnet, daß** an der zum feststehenden Bereich des Spindelkopfes (1) weisenden Stirnseite des Turbinenrades (10) zwei Magnete (7) befestigt sind.

15. Drehzahlüberwachung, insbesondere Stillstandsüberwachung einer Werkzeugspindel, nach Anspruch 14, **dadurch gekennzeichnet, daß** die Magnete (7) in Ausnehmungen (11) des Turbinenrades (10) befestigt sind.

16. Drehzahlüberwachung, insbesondere Stillstandsüberwachung einer Werkzeugspindel, nach Anspruch 14 oder 15, **dadurch gekennzeichnet, daß** die Magnete (7) durch Kleben am Turbinenrad (10) befestigt sind.

17. Drehzahlüberwachung, insbesondere Stillstandsüberwachung einer Werkzeugspindel, nach einem oder mehreren der Ansprüche 1 bis 16, **dadurch gekennzeichnet, daß** die Infrarotübertragungskanäle mittels eines 1-Hz Grundtaktes überwacht werden und bei Ausbleiben dieses Taktes der Antrieb der Spindel (2) deaktiviert wird.

18. Drehzahlüberwachung, insbesondere Stillstandsüberwachung einer Werkzeugspindel, nach Anspruch 17, **dadurch gekennzeichnet, daß** bei Ausbleiben des 1-Hz Grundtaktes die Druckluftfreigabe der Antriebsluft und der Bremsluft gesperrt wird.

19. Drehzahlüberwachung, insbesondere Stillstandsüberwachung einer Werkzeugspindel, nach einem oder mehreren der Ansprüche 1 bis 18, **dadurch gekennzeichnet, daß** die Auswertebaugruppe als µC-System ausgebildet ist.
